Europäisches Patentamt

(19) **European Patent Office**

Office européen des brevets

(11) Publication number: **0 017 685**
**B1**

(12) **EUROPEAN PATENT SPECIFICATION**

(45) Date of publication of patent specification: 14.03.84

(51) Int. Cl.³: **G 21 C 15/24, F 04 D 15/02**

(21) Application number: **79302545.3**

(22) Date of filing: **13.11.79**

(54) Pump drive assembly for liquid metal reactor.

(30) Priority: **23.04.79 US 32572**

(43) Date of publication of application:
**29.10.80 Bulletin 80/22**

(45) Publication of the grant of the patent:
**14.03.84 Bulletin 84/11**

(84) Designated Contracting States:
**DE FR GB**

(56) References cited:
**CH - A - 419 846**
**CH - A - 513 337**

**ENGLISH ELECTRIC JOURNAL, vol. 22,
September-October 1967, pages 23-26 Stafford,
G.B. "English electric equipment for dounreay
PFR"**
The file contains technical information
submitted after the application was filed and not
included in this specification

(73) Proprietor: **WESTINGHOUSE ELECTRIC
CORPORATION**
**Westinghouse Building Gateway Center
Pittsburgh Pennsylvania 15222 (US)**

(72) Inventor: **Planchon, Harry Peter Jr.**
**117 Stoneybrook Drive**
**Greensburg, Pennsylvania (US)**
Inventor: **Severson, Wayne Jerome**
**232 Capitol Drive**
**Pittsburgh, Pennsylvania (US)**

(74) Representative: **van Berlyn, Ronald Gilbert**
**23, Centre Heights**
**London, NW3 6JG (GB)**

Pump drive assembly for liquid metal reactor

This invention relates to primary pumping systems for liquid metal cooled breeder reactors, and more particularly provides arrangements for selectively controlling pump coastdown characteristics.

Fast breeder nuclear reactors typically circulate a coolant through a reactor vessel containing a core of nuclear fuel and shield assemblies and other components which support the assemblies and monitor and control core characteristics. Coolant flows, for example, upwardly through the core, absorbing heat energy, then flows about the other in-vessel components above the core, is discharged from the vessel and flows through a heat exchanger, giving up heat energy typically for the ultimate purpose of electric power generation, and is pumped by primary system pumps back into the reactor vessel, completing the circuit.

In the case of liquid metal cooled fast reactors, the temperature differences between the vessel inlet and outlet are relatively large, as compared to other liquid cooled reactor types, being on the order of 122°C to 148°C. This large temperature differential places severe design restrictions on reactor systems and components which must accommodate thermal transients resulting from, among other conditions, reactor shutdown. In order to shut down the reactor either during normal operation or under abnormal conditions such as loss of electrical power to the primary pumps, control means such as neutron absorbing rods are inserted into the core, and the electrically driven primary coolant pumps are deenergized. As described in the English Electric Journal Vol. 22, Sept./Oct. 1967, pages 23—25, the pumps coastdown to a low speed at which time a pony motor associated with each primary pump operates the pump through an overrunning clutch. The pony motors are engaged to prolong the total forced flow period so as to provide adequate decay heat removal from core components. The pony motors are powered by the plant AC electrical system, which also powers the primary pumps, and are also provided with numerous backup electrical power sources such as diesel-generators or batteries. Should the normal and back-up sources of electrical power not be available, decay heat removal is accomplished by natural circulation cooling.

The primary pumps are deenergized, or "tripped", to mitigate the thermal transients resulting from the abrupt reduction in the core-power-to-coolant-flow ratio caused by the reactor core shut down. The rate at which the coolant flow coasts down is a function of the kinetic energy in the rotating primary pumps prior to deenerigzation. In the past, the selection of kinetic energy requirements for the primary pumps has represented a difficult compromise between two competing considerations.

In the first instance, a large pump rotating inertia provided a relatively prolonged coastdown. This long coastdown period assures adequate decay heat removal from the core components, including fuel, blanket and control assemblies, even in the unlikely event of loss of AC power to the reactor plant and simultaneous failure of the active backup battery or diesel system. The point in time at which the primary pumps stop affects the decay heat power in the core that must be removed when natural circulation within the reactor system becomes the sole circulating force. A longer coastdown lessens the decay power that must be removed by natural circulation. Thus, it appears to be advantageous to specify large primary pump inertias so as to prolong the coastdown period, particularly where it is assumed that electrical power is unavailable to the primary pumps and pony motors.

Alternatively, large pump inertias and a prolonged coastdown following core shut down results in an initially rapid and potentially severe temperature transient on the components within the reactor vessel. The power-to-flow ratio is reduced too quickly. The temperature transient, although mitigated by mixing of the coolant within the vessel above the core, is also experienced by components downstream of the vessel. Thus, it also appears to be advantageous to specify small primary pump inertias to provide a rapid initial pump coastdown and maintain acceptable power-to-flow ratios at the initiation of shutdown.

As a result of the conflicting requirements, the selection of the primary pump inertia represents a compromise between minimizing the initial thermal transients and additionally permitting a smooth transition from forced circulation flow to natural circulation flow only subsequent to adequate heat removal. The compromise does not allow for substantial flexibility in the pump design. In the prior art relatively small pump inertias have been selected which minimize the initial thermal transients resulting from normal plant shutdowns and which marginally accommodate the natural circulation decay heat removal requirements in the event of total loss of power to the pony motor. This additionally requires substantial backup pony motor power sources, such as batteries or diesel generator units, which require constant and vigilant maintenance to assure operation in the unlikely event of loss of normal AC power. The backup systems are active in the sense that they must in some fashion be activated to provide power and must be coupled to the pony motors.

It is therefore the principal object of the present invention to provide a reactor with a main coolant pumping arrangement which enhances pump design flexibility and which sufficiently meets the conflicting pump coastdown requirements.

With this object in view, the present invention resides in a pump drive assembly for the coolant pump of a liquid metal cooled breeder nuclear reactor having a main drive motor coupled to the pump for operating said pump at a predetermined operating speed and an auxiliary pony motor associated with said pump for operating said pump upon reactor shutdown, characterized in that said pony motor has a flywheel associated therewith and said pony motor is adapted to be continuously operated during reactor operation and is so associated with said pump by an overrun clutch as to be connected to said pump at a preselected second speed substantially below said operating speed so as to extend coastdown time of said pump from said preselected second speed to stand-still.

The invention alleviates the need to compromise between the competing prolonged versus rapid coastdown requirements in the design of the primary pump. The initial coastdown rate immediately subsequent to shutdown, when the core power output decreases most rapidly, is rapid, thus mitigating the thermal transients experienced by components as a result of the abrupt power reduction. Subsequently, at a selected flow rate, preferably about 10% of the normal full power operational flow rate, pump sqeed is maintained by the pony motor. If the power supply to the pony motor fails, the inertia of the pumping flywheel with which the pump is preferably provided operates to prolong the coastdown and provide an extended and smooth transition to natural circulation.

The operational advantages are most beneficial in the event of loss of normal AC power to both the primary pumps and pony motors. In that event the rotating inertia in the pony motor fly wheel assures a prolonged coastdown, even if the backup systems are unavailable.

The invention will become more readily apparent from the following description of a preferred embodiment thereof shown, by way of example only, in the accompanying drawings, in which:

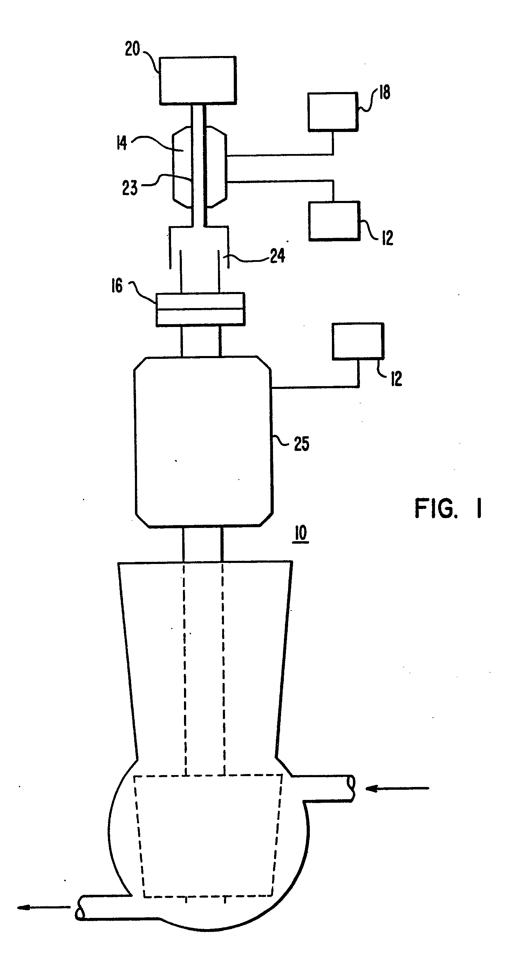

Figure 1 is a simplified schematic of a pumping system in accordance with the invention;

Figure 2A is a graph plotting core flow (percent, ordinate) versus time (seconds, abscissa) for four exemplary cases;

Figure 2B is a graph plotting the same data as Figure 2A on a semi-log scale for the four exemplary cases;

Figure 3 is a graph plotting the exit temperature from the hottest core fuel channel, (degrees C, ordinate) versus time (seconds, abscissa) for the four exemplary cases;

Figure 4 is a graph plotting the exit temperature from the hottest core radial blanket channel (degrees C, ordinate) verses time (seconds, abscissa) for the four exemplary cases.

In loop type liquid metal cooled nuclear fast breeder reactors an alkali metal, such as sodium, is circulated by a plurality of primary rotating, typically centrifugal, pumps through a reactor vessel containing the reactor core. Typically coolant enters the bottom portion of the reactor vessel, flows upwardly through the heat generating core components, is mixed above the core within the vessel and the upper internals structures, is discharged from the vessel to heat exchange apparatus, and is pumped back into the vessel. The core includes a plurality of assembly types, including fissile fueled assemblies, control assemblies, fertile fueled radial blanket assemblies, and removable radial shield assemblies. The fueled assemblies comprise a plurality of fuel pins in a bundle array, about which the reactor coolant flows. A typical reactor has a plurality of circulating loops, each with a primary pump and heat exchanger. So-called pool type fast reactors operate in a generally similar fashion, and it is to be understood that the invention described herein is equally applicable to such reactors.

Upon shutdown of the reactor, control elements are inserted into the core, rapidly decreasing core power. The primary pumps 10, powered by the main plant AC electrical system 12 are deenergized, beginning coastdown, during which a generally decreasing flow of coolant is forced through the reactor core. Shutdown of the reactor core similarly occurs in the event of loss of power to the primary pumps.

At a selected flow rate, in the range of five to fifteen percent of full power flow, and preferably about ten percent of full power flow, a pony motor 14 associated with each pump engages the primary pump 10 through coupling means such as an overrunning clutch 16. The pony motor coupling assembly also includes a speed reduction gearing assembly 24. The pony motor 14, continuously running during power operation, is also powered by the plant AC power 12, and additionally is provided with backup power sources 18 such as batteries and/or diesel-generator units.

In accordance with one embodiment of the invention the pony motor 14 includes means for increasing the rotating inertia of the pony motor assembly, preferably in the form of an enlarged fly wheel 20. In the event of loss of AC power, as well as loss of backup power to the pony motor, the inertia provided by the fly wheel will provide an extended coastdown. The pony motor and fly wheel assembly will substantially maintain rotational speed and kinetic energy under loss of power conditions until coupling with the primary pump occurs. The pony motor can alternatively be provided with an enriched, or oversized, rotor or shaft 23. The fly wheel, shaft or other inertia increasing means is designed to have a selected rotational kinetic energy at a preselected primary pump speed, in the range of 10% of full power operational speed.

Two distinct flow coastdown rates are thus fixed by first the primary pump and main motor kinetic energy, and second the enriched pony motor assembly and coupled primary pump and main motor kinetic energy.

Exemplary analyses were performed based upon a reactor shutdown transient caused by, or experiencing, total loss of electrical power to both the primary pump and the pony motor. Four transients corresponding to different combinations the primary pump initial kinetic energy and pony motor assembly kinetic energy were analyzed. The Base Case is a typical primary pump of prior art design, for example, as scheduled to be utilized in the Clinch River Breeder Reactor Plant, selected to meet the competing requirements for minimum post shutdown thermal transient shock and adequate cooling during the transition period to natural circulation. The kinetic energy, or inertia, for each of these cases is shown in Table I. Column A represents the percentage of primary pump kinetic energy at full power flow, the Base Case being 100%; Column B represents the percentage of kinetic energy of the primary pump and enriched pony motor assembly at 10% of full power flow, the Base Case including kinetic energy of the primary pump only. Table II presents corresponding exemplary parameters for the main pump shaft and pony motor fly wheel. The analyses are all based upon a primary pump full power rotational velocity of 1116 revolutions per minute and a pony motor and fly wheel speed of 1725 revolutions per minute. The analyses were idealized to the extent that the pony motor inertia and friction in the pony motor and gear box were neglected. In a specific design these factors would be accounted for by small adjustments to the fly wheel dimensions.

TABLE I

| Case | Column A | Column B |
|------|----------|----------|
| Base | 100% | 100% |
| I | 50% | 200% |
| II | 75% | 300% |
| III | 100% | 400% |

TABLE II

| Case | Combined pump and main motor inertia m²kg | Combined pump motor and fly wheel inertia m²kg | Pony motor fly wheel diameter (M) | thickness (M) |
|------|------|------|------|------|
| Base | 112 | — | — | — |
| I | 56 | 7 | 0.42 | 0.225 |
| II | 84 | 10.5 | 0.48 | 0.24 |
| III | 112 . | 14 | 0.51 | 0.256 |

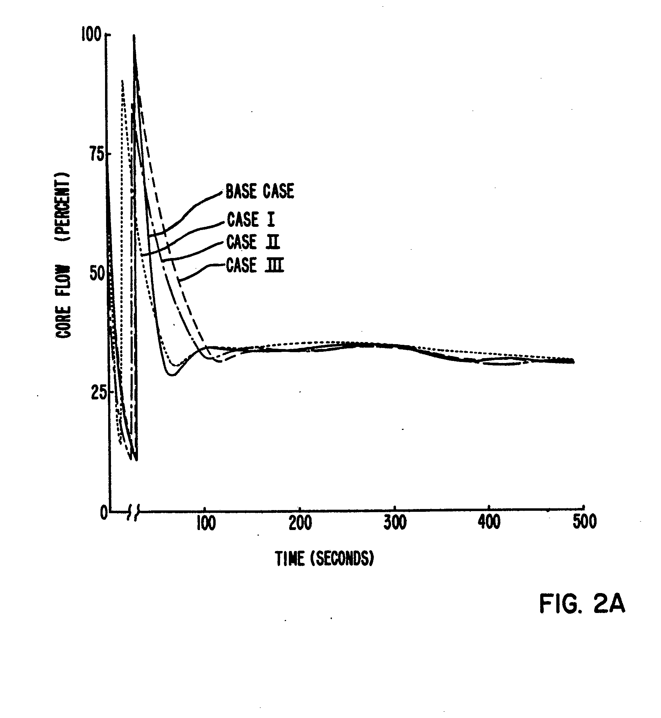

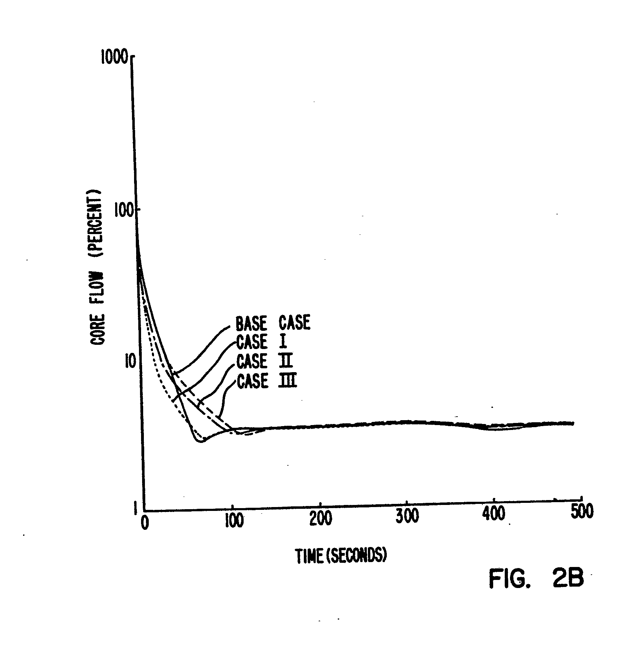

A comparison of the flow through the core for the four cases is shown in Figures 2A and 2B. In Figure 2A the flow scale is changed to ten times the flow where the flow approaches 10% of full flow, for graphical resolution. A comparison of the Base Case and Case I shows that the initial coastdown time to approximately 10% of full flow is approximately proportional to pump initial kinetic energy, taking approximately twice as long in the Base Case as in Case I. For all of the Cases, increasing the kinetic energy at 10% of full flow prolongs the final phase of flow coastdown. A comparison of Case III to the Base Case shows that the pony motor excess kinetic energy extended the pump stop time, being the time at which the kinetic energy of the pump is finally exhausted and the pump stops turning, from 65 seconds to 102 seconds. At that point natural circulation becomes the cooling flow mechanism. Figure 2B plots the same data as Figure 2A on a semi-log scale.

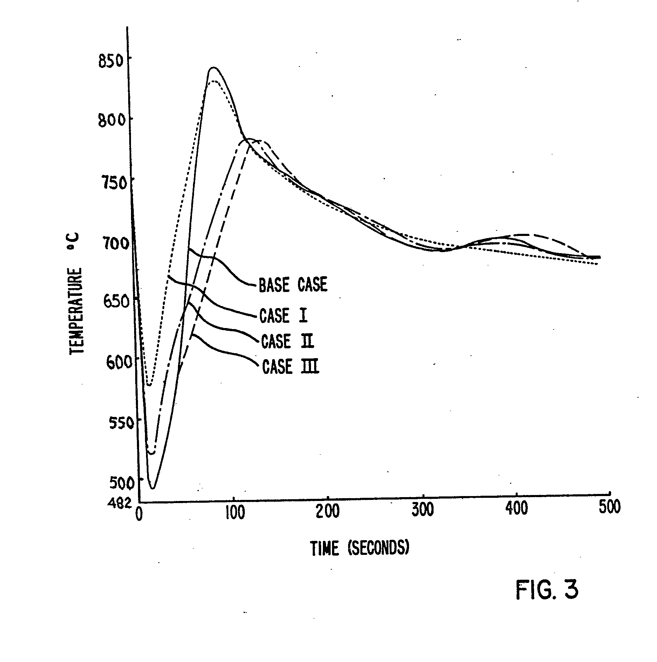

The beneficial results of tailoring two dinstinct coastdown rates are best realized upon review of Figure 3 which shows the temperature response of sodium coolant exiting the beginning of core life fuel assembly which provides the highest temperature sodium ("hot channel") subsequent to shutdown. As is evident, the peak hot channel temperatures are reduced relative to the Base Case, particularly in Cases II and III. Additionally, Cases I and II where the initial pump kinetic energy has been reduced, result in lower rates of initial temperature decrease and shallower minimum temperatures, reducing the magnitude of the short term temperature swing. This indicates a marked reduction in the post-shutdown thermal shock for core components and other reactor system structures. In Case III, for example, the maximum temperature was reduced from approximately 450°C to 420°C.

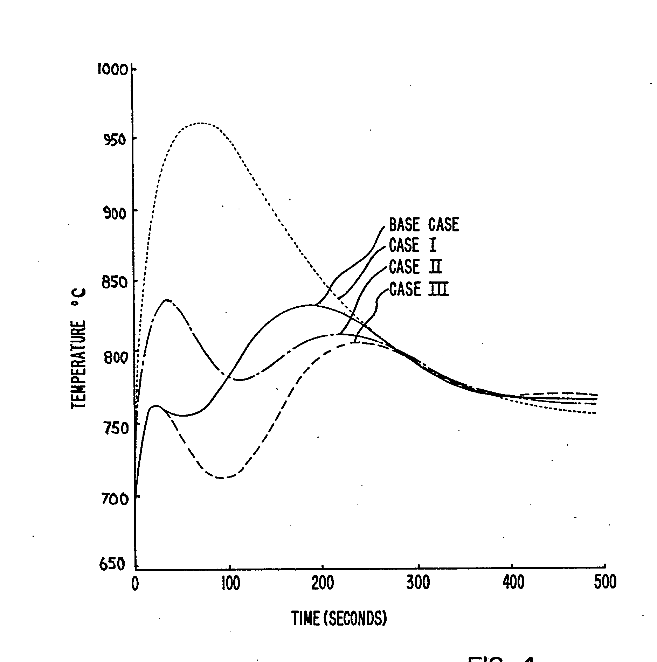

Figure 4 shows, similar to Figure 3, the temperature response for the end of life hot channel among the radial blanket assemblies. The transient temperatures are distinctly different from those of the fuel assemblies as the individual radial blanket pins, for the exemplary Clinch River Breeder Reactor Plant Design, are of larger mass than the fissile fuel pins and have a lower coolant flow rate as a function of surface area, both of which tend to increase peak temperatures, as well as decreased power output which tends to decrease peak temperatures. Because of the relatively large mass and low flow, the radial blanket assemblies require longer coastdown times to dissipate stored energy. However, later in the transient the higher thermal capacitance of the larger pins makes the pins less sensitive to flow perturbations.

As shown in Figure 4, the reduction of primary pump initial kinetic energy by 50% results in an initial flow coastdown so rapid that the stored energy in the radial blanket pins cannot be adequately removed, providing a peak temperature above 515°C, notably above the Base Case. Thus, case A would be unacceptable. However, the peak temperatures are substantially lower in Cases I and III, Case III being approximately 28°C less than the Base Case.

It is thus evident that tailoring or adjusting the coastdown characteristics so as to provide at least two distinct sources of kinetic energy, even in the event of loss of power, is highly advantageous. In addition to the preferred embodiment incorporating a fly wheel directly connected to the pony motor, additional pumping system configurations are equally possible. Enriching the pony motor armature, for example, achieves similar results.

Additionally, in some reactor systems it may be beneficial to begin the extended coastdown at other than the pony motor pickup speed which is preset by the overrunning clutch. For example, where the pony motor is to be coupled at 10% of full flow velocity and it is preferable to add kinetic energy at a point between 100% and 10% of full power velocity, for example 15%, a fly wheel running during normal operation at 15% velocity can be geared into the main pump motor assembly instead of being permanently coupled to the pony motor. Thus, a normal shutdown would have an initial distinct coastdown rate between 100% and 15% velocity, a second between 15% and 10%, and then be driven at 10% by the pony motor for the desired period of time. In the event of loss of power to the pony motor, the initial coastdown would be to 15% of flow speed, and the extended coastdown would begin at 15% velocity, instead of 10% velocity. It may also be desirable to have the kinetic energy added at below the pony motor coupling speed, in which case a rotating fly wheel can be associated with the pony motor speed reduction gearing assembly 24 so as to couple at, for example, 5% of the full power rotational speed. In the event of total power loss to the pony motor the initial coastdown to 5% speed would be relatively rapid, followed by an extended coastdown beginning at 5% speed. Coupling of the unpowered pony motor at 10% speed will have only a slight effect on the coastdown rate between 10% and 5% rotational speed.

Additionally, kinetic energy can be added at the pony motor coupling speed, but not through a connection directly to the pony motor shaft, for example, by driving the fly wheel through the pony motor gear reducer 24. A fly wheel which would approximately double the total kinetic energy at 10% of full flow speed would be approximately five and one-half feet in diameter and one foot thick, rotating at 112 revolutions per minute. This is similar in size to fly wheels on pressurized water reactor main coolant pumps.

## Claims

1. A pump drive assembly for the coolant pump of a liquid metal cooled breeder nuclear reactor having a main drive motor coupled to the pump for operating said pump at a predetermined operating speed and an auxiliary pony motor associated with said pump for operating said pump upon reactor shut-down, characterized in that said pony motor (14) has a flywheel (20) associated therewith and said pony motor (14) is adapted to be continuously operated during reactor operation and is so associated with said pump (10) by an overrun clutch (16) as to be connected to said pump at a preselected second speed substantially below said operating speed so as to extend coastdown time of said pump (10) from said preselected second speed to stand-still.

2. A pump drive assembly as claimed in claim 1 characterized in that said preselected second pump speed is such that the pump flow rate is at about 10% of the pump operating speed flow rate.

## Revendications

1. Dispositif d'entraînement de pompe de refroidissement d'un surrégénérateur nucléaire à refroidissement par métal liquide, comportant un moteur principal d'entraînement accouplé à la pompe pour en assurer la rotation à une vitesse de fonctionnement prédéterminée, et un moteur-démarreur auxiliaire associé à la pompe pour en assurer le fonctionnement lors d'un arrêt du réacteur, ce dispositif étant caractérisé en ce que le moteur-démarreur (14) comporte un volant (20) qui lui est associé; et en ce que le moteur-démarreur, adapté de manière à pouvoir marcher en continu pendant le fonctionnement du réacteur, est associé à la pompe (10) par l'intermédiaire d'un embrayage à roue libre (16) de manière à être accouplé à la pompe à une seconde vitesse présélectionnée sensiblement inférieure à la vitesse de fonctionnement, afin de prolonger le temps d'arrêt progressif de la pompe (10) à partir de cette seconde vitesse présélectionnée jusqu'à l'arrêt total.

2. Dispositif d'entraînement de pompe suivant la revendication 1, caractérisé en ce que cette seconde vitesse présélectionnée de la pompe est telle que le débit de celle-ci est d'environ 10 % du débit à la vitesse de fonctionnement de la pompe.

**Patentansprüche**

1. Pumpenantriebseinrichtung für die Umwälzpumpe eines mit flüssigem Metall gekühlten Brütereaktors mit einem zum Antrieb der Pumpe mit einer vorgegebenen geschwindigkeit an die Pumpe angekuppelten Hauptantriebsmotor und einem Hilfsmotor zum Antrieb der Pumpe bei Stillegung das Reaktors, dadurch gekennzeichnet, dass der Hilfsmotor (14) ein Schwungrad (20) aufweist und für dauernden Betrieb während des Reaktorbetriebs ausgelegt ist, und dass der Hilfsmotor (14) mit der Pumpe (10) über einer Freilaufkupplung (16) so verbunden ist, dass er bei einer vorgegebenen, beträchtlich unter der Betriebsgeschwindigkeit der Pumpe liegenden zweiten Geschwindigkeit mut der Pumpe (10) gekuppelt wird, um dadurch die Auslaufzeit der Pumpe (10) von der vorgegebenen zweiten Geschwindigkeit bis zum Stillstand zu verlangern.

2. Pumpenantriebseinrichtung nach Anspruch 1, dadurch gekennzeichnet, dass die vorgegebenen zweite Geschwindigkeit so gewählt ist, dass die Pumpleistung etwa 10% der Pumpleistung bei voller Arbeitsgeschwindigkeit ist.

FIG. 1

FIG. 2A

FIG. 2B

FIG. 3

FIG. 4